# FASCICULE DE BREVET EUROPEEN

(11) **EP 0 370 556 B1**
(45) Date de publication et mention de la délivrance du brevet: **02.03.1994**
(21) Numéro de dépôt: 89202869.7
(22) Date de dépôt: 13.11.1989
(51) Int. Cl.: B60P 3/025, B60P 3/34

(54) **Voiture-tribune**
Tribünenfahrzeug
Dual-level vehicle

(30) Priorité: 22.11.1988 BE 8801316
(43) Date de publication de la demande: 30.05.1990
(73) Titulaire: Jonckheere, Gilbert Robert, B-7700 Mouscron (BE)
(72) Inventeur: Jonckheere, Gilbert Robert, B-7700 Mouscron (BE)
(74) Mandataire: Donné, Eddy

(56) Documents cités:
- GB-A- 1 408 898
- NL-A- 6 502 325
- US-A- 2 901 282

## Description

La présente invention concerne une voiture-tribune, plus précisément un plancher de voiture-tribune qui peut se déplacer normalement sur la route mais dont une partie peut se déplier afin de former, en certaines occasions, un plancher relativement grand pour une tribune. De par sa nature même, ce plancher peut facilement être déplacé, monté ou démonté.

On connaît déjà de tels véhicules qui peuvent être transformés en planchers de tribune mais dont le plancher n'a qu'un seul niveau à moins que des dispositions spéciales ne soient prises, autrement dit à moins que des étages ne soient prévus, comme, par exemple, des gradins pour créer des différences de niveau afin que le public, éventuellement sur des bancs, des chaises, etc., puisse y prendre place sans que la visibilité des personnes placées derrière soit moins bonne que celles des personnes placées devant.

Il est clair que, d'une part, l'équipement et, d'autre part, le montage et démontage de tels gradins coûtent non seulement beaucoup d'argent mais prennent aussi beaucoup de temps, sans parler du volume que de tels gradins occupent pendant le transport.

La présente invention concerne une voiture-tribune qui exclut totalement les inconvénients susmentionnés du type connu de voiture-tribune et est réalisée de telle façon qu'un plancher de tribune puisse être formé de façon simple et automatique sans intervention d'autres moyens et qu'il puisse, selon les besoins, être subdivisé en trois niveaux différents.

La voiture-tribune selon l'invention du type qui se compose essentiellement d'un plancher fixe qui forme aussi le châssis du véhicule, le long duquel sont prévues, dans le sens longitudinal et des deux côtés du véhicule, des parties de plancher verticales qui peuvent être rabattues pour former une estrade ou une tribune, est caractérisée par le fait que ces parties de plancher peuvent être placées à un niveau différent par rapport à la partie de plancher fixe.

Dans l'intention de mieux illustrer les caractéristiques selon l'invention, une forme d'exécution recommandée est décrite ci-dessous à titre d'exemple et sans le moindre caractère limitatif en renvoyant aux illustrations en annexe:
La figure 1 représente une vue de face d'une voiture-tribune selon l'invention dans laquelle la voiture est en mouvement;
La figure 2 représente à une plus grande échelle la partie de la figure 1 désignée par F2;
Le vue de la figure 3 est identique à celle de la figure 1 mais avec la voiture-tribune en position d'utilisation;
La figure 4 représente à une plus grande échelle la partie de la figure 3 désignée par F4;
La figure 5 représente une vue selon la flèche F5 dans la figure 3;
La figure 6 représente une vue partielle selon la flèche 6 dans la figure 1;
La figure 7 représente une coupe selon la ligne VII-VII dans la figure 6;
La figure 8 représente une vue selon la flèche F8 dans la figure 1;
La figure 9 représente à une plus grande échelle une vue de la partie qui est désignée par F9 dans la figure 3;
La figure 10 représente une vue d'en haut de la figure 9;
La figure 11 représente une vue identique à celle de la figure 9 mais où le mécanisme de support apparaît à l'état déplié;
La figure 12 représente une coupe selon la ligne XII-XII dans la figure 2.

Les figures donnent une représentation schématique d'une voiture-tribune 1 qui se compose essentiellement d'un plancher fixe 2, qui forme aussi le châssis du véhicule et sur lequel sont disposés des montants 3 à intervalles donnés qui sont reliés l'un à l'autre en leur sommet par des supports 4 qui peuvent soutenir un toit non représenté dans les illustrations.

Le châssis 2 repose sur des paires de roues représentées schématiquement par le numéro 5 et est renforcé sur toute sa longueur par le dessous au moyen de barres longitudinales 6-7.

A ces barres longitudinales 6-7 sont fixées - dans le cas précis, en trois emplacements - des traverses creuses 8 que traversent des bras pivotants, un seul bras pivotant incurvé 9 et deux bras pivotants droits 10 et 11 de part et d'autre du bras pivotant 9.

Chaque bras pivotant 9 est fixé dans sa traverse creuse respective 8 au moyen d'un axe 12 de façon à pouvoir pivoter tandis que les bras pivotants 10 et 11 sont fixés dans leurs traverses creuses respectives 8 au moyen d'un axe commun 13 de façon à pouvoir pivoter.

A chaque extremité libre des traverses creuses 8 sont prévues deux lèvres 14-15 dans lesquelles sont pratiqués plusieurs orifices 16-17 co-axiaux deux à deux.

Entre les deux bras pivotants 10-11, dans l'axe des séries d'orifices 16-17, est fixé à l'extrémité de la traverse creuse un dispositif 18 qui se compose essentiellement d'un logement 19 dans lequel sont logés deux pistons 20 et 21 et dont les extrémités présentent des passages, respectivement 22 et 23 pour les tenons de verrouillage 24 et 25 qui sont placés sur les pistons susmentionnés et peuvent entrer en prise avec une paire d'orifices 16-17 situés l'un en face de l'autre.

Un ressort 26 est prévu entre les pistons 20 et 21 pour essayer en permanence d'écarter ces pistons l'un de l'autre, autrement dit, pour essayer en permanence d'introduire les tenons 24 et 25 dans une paire d'orifices 16-17 afin de bloquer les bras pivotants 10 et 11 dans une position bien déterminée par rapport à leur traverse creuse 8. Entre les parois aux extrémités du logement susmentionné 19 et les positions extrêmes des pistons 20 et 21, sont prévus sur le logement 19 des raccords 27 et 28 qui sont reliés en série à une pompe à main hydraulique dont la voiture est équipée.

Chaque traverse creuse 8 ainsi que les bras pivotants 9 présentent respectivement une forme en V évasé ou une double forme en V évasé de sorte que le pivotement de ce bras 9 surtout soit possible sans qu'il entre en contact avec le fond de la traverse creuse 8.

Chaque bras pivotant 9 et les bras pivotants y associés 10 et 11 sont fixés de part et d'autre des supports verticaux, respectivement 29 et 30 dont le premier est nettement plus court que le deuxième.

Le support 29 se compose de deux montants 31 et 32 qui sont reliés l'un à l'autre par une pièce transversale 33 tandis que le support 30 est formé de deux montants 34 et 35 qui sont reliés l'un à l'autre par une pièce transversale 36.

Des axes, respectivement 37 et 38, fixent l'extrémité de chaque bras pivotant 9 à l'extrémité inférieure des supports 29 et 30 de façon qu'il puisse pivoter, tandis que les bras pivotants 10 et 11 sont également fixés aux supports 29 et 30 au moyen d'un pivot commun mais à un endroit tel que l'écart entre les axes 37 et 39, d'une part, et 38 et 40, d'autre part, soit égal à l'écart entre les axes susmentionnés 12 et 13 pour former ainsi un système parallélogramme parfait.

A l'extrémité supérieure des supports 29 et 30 sont fixés au moyen de pivots, respectivement 41 et 42, des cadres, respectivement 43 et 44, de façon à pouvoir pivoter.

Entre les montants 31-32 et 34-35 des supports 29 et 30, au moins un ressort de torsion, et en l'occurence deux ressorts de torsion 45 et 46 par montant 29 et 30, est placé sur les pivots 41 et 42. Les extrémités libres 47 et 48 de chacun des ressorts de torsion s'appuient par l'arrière sur des butées qui, dans le cas du support 29, sont formées par, d'une part, l'axe 39 et, d'autre part, un élément transversal 49 fixé au cadre 43, tandis que ces butées, dans le cas du support 30, sont formées par un élément transversal 50 qui est situé entre les montants 34 et 35 du support 30 et un élément transversal 51 qui forme un tout avec le cadre 44.

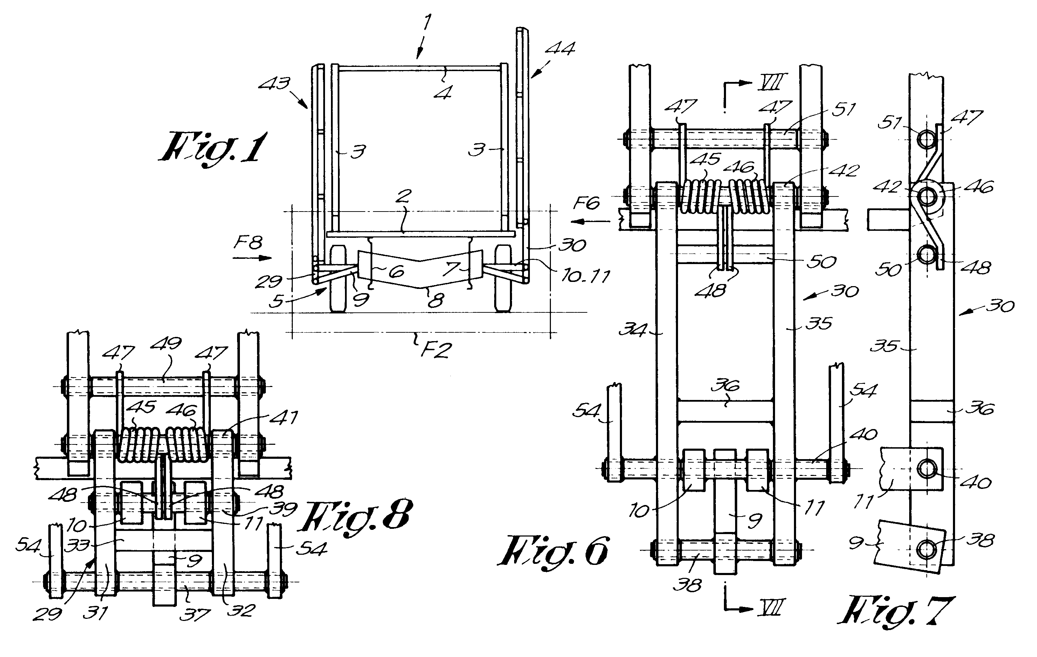

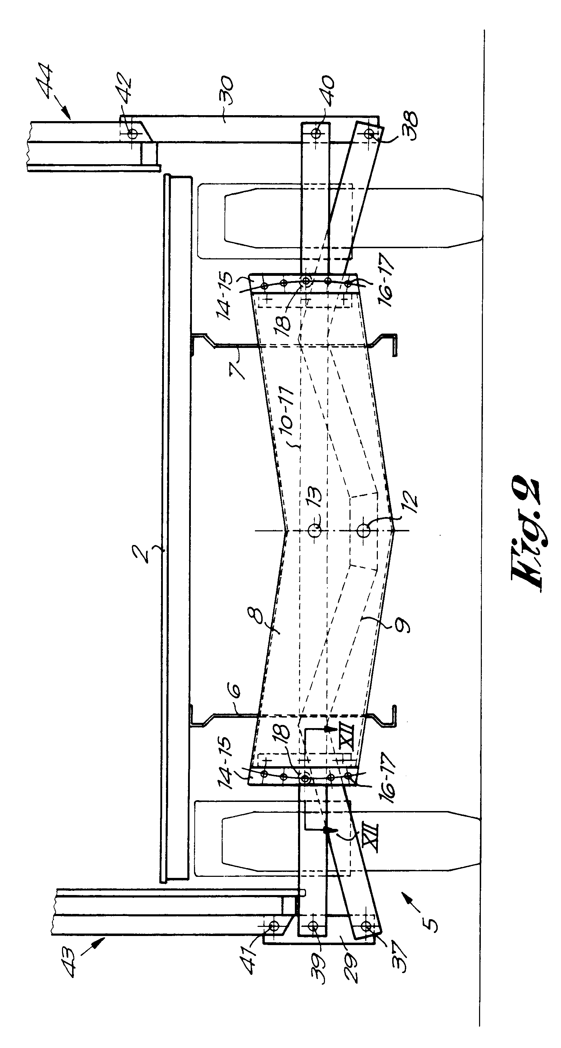

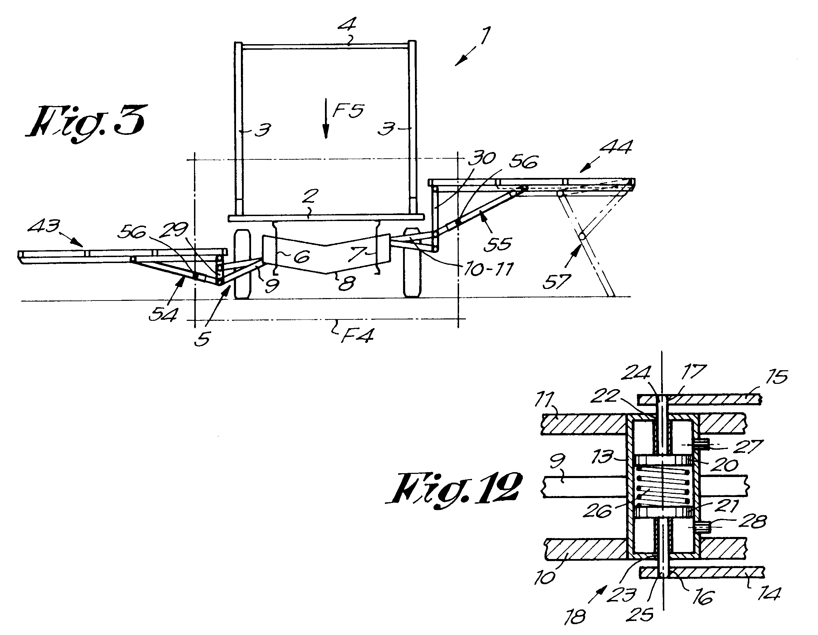

Les ressorts de torsion 45 et 46 sont disposés de façon à compenser autant que possible le poids des cadres 43 ou 44 afin de faciliter au maximum le mouvement descendant de ces cadres 43-44 de l'état illustré à la figure 1 à l'état illustré à la figure 3.

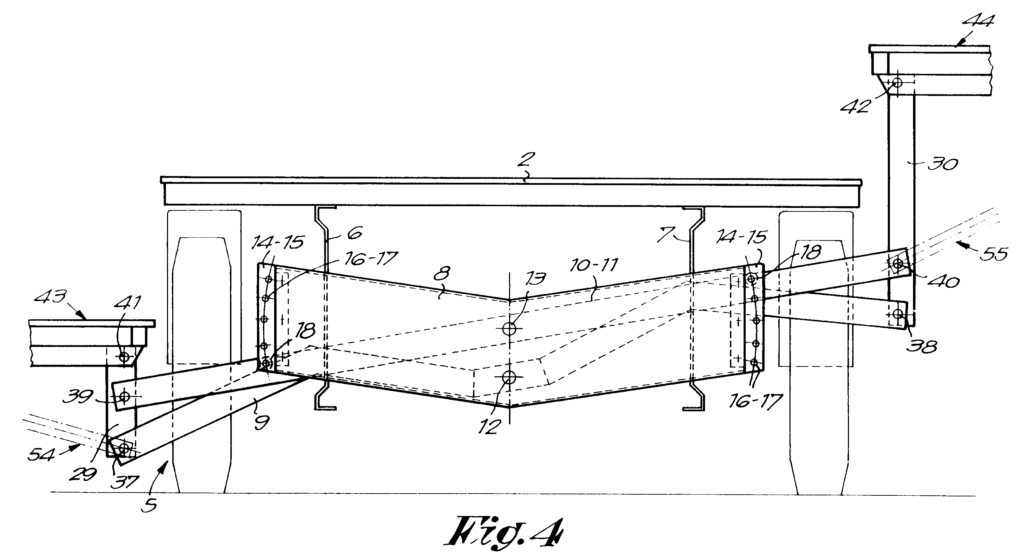

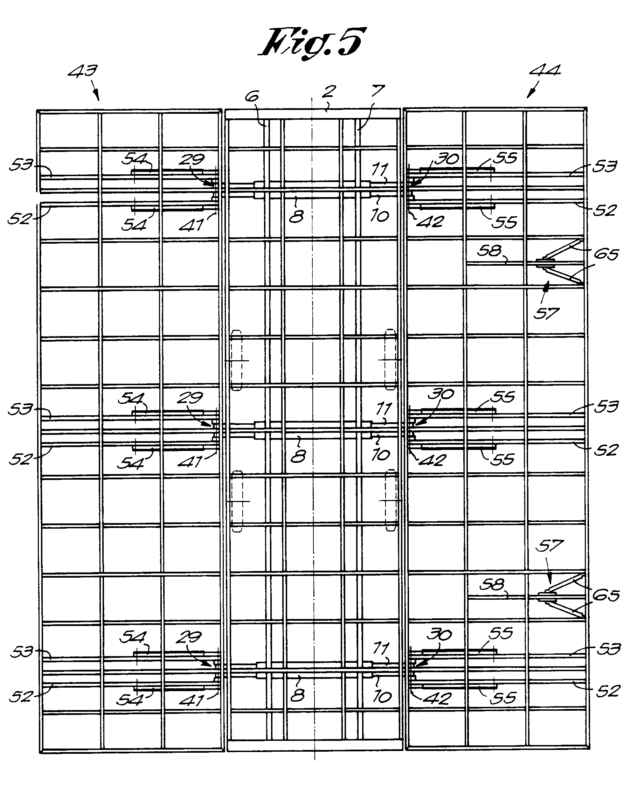

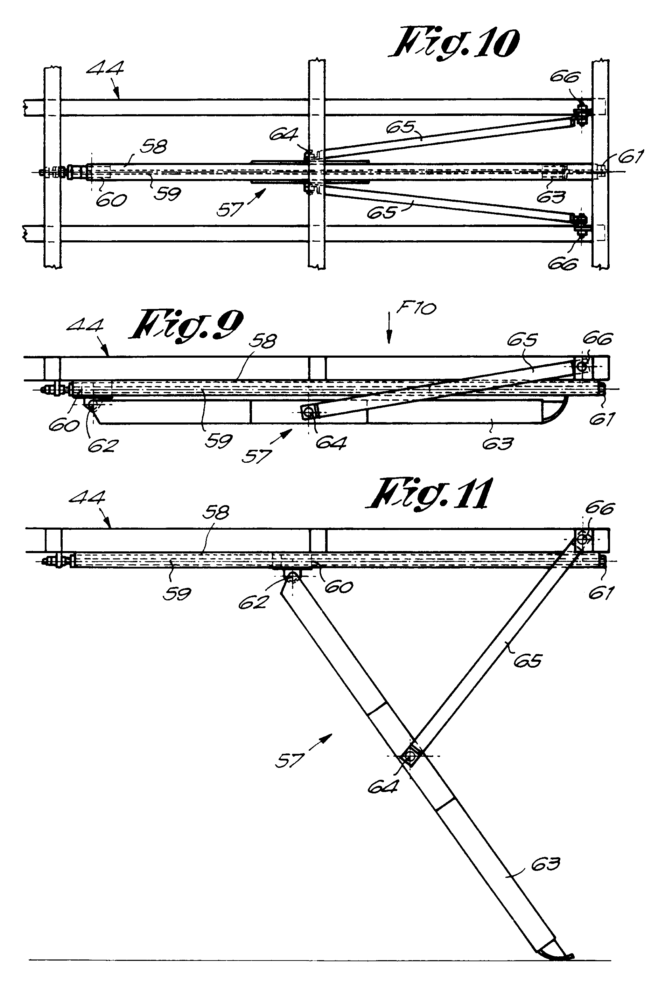

Comme l'illustre plus spécialement la figure 5, les cadres 43 et 44 se composent de plusieurs barres transversales et longitudinales et sont pourvus, dans cet exemple d'exécution, de trois supports 29 et trois supports 30 et à chaque support des cadres 43 ou 44 sont adjointes deux barres transversales supplémentaires 52 ou 53 avec lesquelles chaque cadre est fixé sur les axes susmentionnés 41 et 42 de façon à pouvoir pivoter.

Entre chaque axe 37 et 40 et le cadre correspondant 43 et 44, cet exemple d'exécution prévoit deux bras téléscopiques, respectivement 54 et 55 qui peuvent automatiquement se déplier ou se replier et dont les composants peuvent être bloqués l'un par rapport à l'autre dans l'état illustré à la figure 1 comme dans l'état illustré à la figure 3 en traversant par exemple ces pièces d'un axe ou d'une pièce similaire 56. Bien que cette possibilité ne soit pas illustrée dans les figures, un tel blocage peut être obtenu en pratiquant un passage dans la partie extérieure du bras téléscopique qui peut concourir avec un des passages de la série pratiquée dans la partie intérieure de ce bras téléscopique.

Enfin, il est possible de prévoir un ou plusieurs étançons complémentaires 57 afin de soutenir le(s) cadre(s) 43 et/ou 44 dans l'état illustré à la figure 3. Dans cet exemple d'exécution, de tels étançons ne sont représentés que pour le cadre 44 mais rien n'empêche de prévoir de tels étançons sous le cadre 43.

Un tel étançon 57 se compose essentiellement d'une structure en forme de tuyau ouverte 58 qui est fixée sous le cadre correspondant et dans laquelle est logée une tige métallique rotative 59 mais non déplaçable axialement sur laquelle est prévu un écrou 60 qui ne peut pas exercer une rotation par rapport à la structure en forme de tuyau 58 mais peut se déplacer dans cette dernière en direction longitudinale.

La tige métallique 59 est de plus munie à son extrémité orientée vers le bord extérieur du cadre correspondant d'un dispositif 61 par lequel elle peut être actionnée. Ce dispositif peut par exemple être formé par un écrou fixé sur la tige métallique.

L'extrémité du pied 63 dont l'autre extrémité libre est arrondie est fixée à l'écrou 60 de façon à pouvoir pivoter librement au moyen d'un axe 62. Une tige 65 est fixée par une extrémité à ce pied 63 au moyen d'un axe 64 et par sa deuxième extrémité au cadre correspondant, en l'occurrence le cadre 44, au moyen d'un axe 66.

Quand la construction faisant l'objet de ce brevet doit être déplacée sur route, elle se trouve dans l'état illustré à la figure 1.

Pour transformer la voiture en tribune à un endroit précis, il faut faire pivoter contre l'action des ressorts 45-46 les panneaux 43 et 44 vers le bas qui sont naturellement tous munis d'un plancher ou d'un aménagement similaire non représenté sur l'illustration après avoir évidemment enlevé au préalable les tenons de verrouillage 56. Quand les cadres 43-44 se trouvent en position horizontale, il faut replacer les tenons de verrouillage 56 afin de bloquer ces cadres en position horizontale.

Il est clair qu'à ce moment les deux cadres 42 et 44 se trouvent à un niveau déterminé, différent du niveau du châssis 2 de la voiture-tribune. Si l'on veut modifier ces différences de niveau, il suffit d'amener de l'huile aux entrées 27 et 28 de chaque logement 19 de sorte que les pistons 20 et 21 puissent être actionnés l'un vers l'autre contre l'action du ressort 26 et les tenons de verrouillage 24-25 à chaque extrémité de chaque traverse 8 sont enlevés des orifices 16-17 pratiqués dans les lèvres 14-15 desdites traverses de sorte que les cadres 43-44 puissent être déplacés en hauteur simplement en faisant tourner les bras pivotants 9-10 et 11 autour de leurs centres de rotation 12 et 13.

Quand le réglage de niveau souhaité des cadres 43 et 44 est atteint, la pression existant entre les extrémités de chaque logement 19 et les pistons 20 et 21 est supprimée de sorte que les tenons 24 et 25 peuvent entrer en prise sous l'influence du ressort 26 avec deux paires d'orifices 16-17, comme représenté par exemple dans la figure 4 avec les paires d'orifices 16-17 qui sont situées dans les parties inférieure gauche et supérieure droite de la traverse 8.

Naturellement, pour régler la hauteur des cadres 43 et 44, il est possible de procéder d'abord à la rotation de ces cadres autour des centres de rotation 12 et 13 et d'ensuite seulement rabattre ces cadres 43 et 44 en position horizontale.

Quand la voiture-tribune se trouve dans l'état précité, il est possible d'abaisser les pieds 63 prévus sous le cadre 44 et éventuellement sous le cadre 43 pour apporter un soutien complémentaire à ces cadres.

C'est une opération très facile qui consiste à faire tourner la tige métallique 59 via l'écrou ou toute autre pièce similaire 61 en déplaçant donc l'écrou 60 sur cette tige métallique de sorte que le pied 63 soit abaissé jusqu'à ce qu'il touche le sol.

Il est clair qu'on obtient de cette façon une voiture-tribune qui permet de former facilement un plancher de tribune en trois parties réglables sur des niveaux différents.

## Revendications

1. Voiture-tribune du type qui se compose essentiellement d'un plancher fixe (2) qui forme aussi le châssis du véhicule le long duquel sont prévues dans le sens longitudinal et des deux côtés du véhicule des parties de plancher verticales (43-44) qui peuvent être rabattues pour former une estrade ou une tribune, caractérisée par le fait que ces parties de plancher (43-44) peuvent être placées à un niveau différent par rapport à la partie de plancher fixe (2).

2. Voiture-tribune selon la revendication 1 caractérisée par le fait que les parties de plancher (43-44) sont fixées aux extrémités supérieures libres de supports verticaux (respectivement 29-30) qui sont fixés l'un à l'autre par le dessous de façon à pouvoir pivoter au moyen d'un système parallélogramme (9-10-11) qui est fixé de façon à pouvoir pivoter par rapport au châssis du véhicule.

3. Voiture-tribune selon la revendication 2 caractérisée par le fait que les supports (29-30) sont de longueurs différentes.

4. Voiture-tribune selon la revendication 2 caractérisée par le fait que le système parallélogramme (9-10-11) est fixé de façon à pouvoir pivoter dans une traverse creuse (8) du châssis du véhicule.

5. Voiture-tribune selon la revendication 4 caractérisée par le fait que la traverse creuse (8) est fixée aux barres longitudinales (6-7) du châssis du véhicule.

6. Voiture-tribune selon la revendication 2, caractérisée par la fait que le système parallélogramme se compose de deux bras pivotants (9-10-11).

7. Voiture-tribune selon la revendication 6 caractérisée par le fait que un des bras pivotants (10-11) est double tandis que le deuxième (9) est situé entre les deux bras pivotants précités (10-11).

8. Voiture-tribune selon la revendication 4 caractérisée par le fait que la traverse creuse (8) a une forme de V évasé tandis que le bras pivotant inférieur (9) présente une forme de V évasé double.

9. Voiture-tribune selon une des revendications 4 à 8 caractérisée par le fait que les extrémités libres de la traverse creuse (8) présentent des lèvres (14-15) dans lesquelles sont pratiqués plusieurs orifices co-axiaux deux à deux.

10. Voiture-tribune selon la revendication 9 caractérisée par le fait qu'un dispositif de serrage (18) est prévu sur le bras pivotant (10-11) dans l'axe des séries d'orifices (16-17) dans les lèvres précitées (14-15) et peut concourir avec les orifices susmentionnés (16-17).

11. Voiture-tribune selon une des revendications précédentes caractérisée par le fait que trois traverses creuses (8) ou plus selon la longueur du véhicule, sont prévues à intervalles réguliers l'une de l'autre dans le sens longitudinal du véhicule.

12. Voiture-tribune selon une des revendications 2 à 11 caractérisée par le fait que des dispositifs (54-55) sont prévus entre les supports verticaux (29-30) et les parties de plancher rabattables (43-44) pour pouvoir bloquer ces parties de plancher (43-44) en différentes positions successives.

13. Voiture-tribune selon une des revendications précédentes caractérisée par le fait que, au moins un support rabattable supplémentaire (57) est prévu sur le bord libre d'au moins une partie de plancher (43-44).

14. Voiture-tribune selon la revendication 12 caractérisée par le fait que chacun des dispositifs (54-55) est formé d'un bras téléscopique dont les pièces rétractables peuvent être bloquées l'une par rapport à l'autre en différentes positions.

15. Voiture-tribune selon une des revendications 2 à 14 caractérisée par le fait qu'au moins un ressort de torsion (45-46) est prévu entre chaque partie de plancher (43-44) et le support vertical correspondant (respectivement 29-30).

16. Voiture-tribune selon la revendication 15 caractérisée par le fait que le ressort de torsion (45-46) est disposé de façon à compenser le poids de la partie de plancher correspondante (43-44).

17. Voiture-tribune selon la revendication 10 caractérisée par le fait qu'un dispositif de serrage (18) se compose d'un logement (19) fixé aux bras (10-11) dans lequel se trouvent deux pistons (20-21) sur la face extérieure desquels se trouvent des tenons (24-25) qui peuvent entrer en prise avec les orifices (16-17) dans la traverse correspondante (8). Entre ces pistons (20-21) se trouve un ressort (26) et, entre les extrémités du logement (19) et chaque piston placé à son côté (20-21), se trouvent des raccords (27-28) pour la pression d'huile.

## Claims

1. Dual-level vehicle of the type which is mainly composed of a fixed floor (2) which also forms the chassis of the vehicle, along which are provided, in the longitudinal sense and on both sides of the vehicle, vertical floor parts (43-44) which can be lowered so as to form a platform or tribune, characterized in that these floor parts (43-44) can be placed on a different level in relation to the fixed floor part (2).

2. Dual-level vehicle according to claim 1, characterized in that the floor parts (43-44) are fixed to the upper free ends of the vertical supports (29-30 respectively) which are fixed to one another below, such that they can swivel by means of a parallelogram system (9-10-11) which is fixed, such that it can swivel in relation to the chassis of the vehicle.

3. Dual-level vehicle according to claim 2, characterized in that the supports (29-30) have different lengths.

4. Dual-level vehicle according to claim 2, characterized in that the parallelogram system (9-10-11) is fixed, such that it can swivel in a hollow cross bar (8) of the chassis of the vehicle.

5. Dual-level vehicle according to claim 4, characterized in that the hollow cross bar (8) is fixed to the longitudinal bars (6-7) of the chassis of the vehicle.

6. Dual-level vehicle according to claim 2, characterized in that the parallelogram system is composed of two swivelling arms (9-10-11).

7. Dual-level vehicle according to claim 6, characterized in that one of the swivelling arms (10-11) is double, whereas the second (9) is situated between the two above-mentioned swivelling arms (10-11).

8. Dual-level vehicle according to claim 4, characterized in that the hollow cross bar (8) has a V-shape, whereas the lower swivelling arm (9) has a W-shape.

9. Dual-level vehicle according to any of claims 4 to 8, characterized in that the free ends of the hollow cross bar (8) have lips (14-15) in which several openings are made, coaxially in pairs.

10. Dual-level vehicle according to claim 9, characterized in that a securing device (18) is provided on the swivelling arm (10-11) in the axis of the series of openings (16-17) in the above-mentioned lips (14-15) which may coincide with the above-mentioned openings (16-17).

11. Dual-level vehicle according to any of the above claims, characterized in that three hollow cross bars (8) or more depending on the length of the vehicle are provided at regular intervals in relation to one another in the longitudinal sense of the vehicle.

12. Dual-level vehicle according to any of claims 2 to 11, characterized in that devices (54-55) are provided between the vertical supports (29-30) and the floor parts which can be lowered (43-44), so that these floor parts (43-44) can be locked in different successive positions.

13. Dual-level vehicle according to any of the above claims, characterized in that at least one supplementary support which can be lowered (57) is provided on the free edge of at least one part of the floor (43-44).

14. Dual-level vehicle according to claim 12, characterized in that each of the devices (45-55) consists of a telescopic arm whose retractable elements can be locked in relation to one another in different positions.

15. Dual-level vehicle according to any of claims 2 to 14, characterized in that at least one torsion spring (45-46) is provided between each floor part (43-44) and the corresponding vertical support (29-30 respectively).

16. Dual-level vehicle according to claim 15, characterized in that the torsion spring (45-46) is placed such that it can compensate the weight of the corresponding floor part (43-44).

17. Dual-level vehicle according to claim 10, characterized in that a securing device (18) is composed of a seat (19) fixed to the arms (10-11) in which are set two pistons (20-21), on the outer side of which are placed lugs (24-25) which can be engaged in the openings (16-17) in the corresponding cross bar (8). Between these pistons (20-21) is situated a spring (26), and between the far ends of the seat (19) and each piston situated next to it (20-21) are provided nipples (27-28) for the oil pressure.

## Patentansprüche

1. Tribünen-Fahrzeug, im wesentlichen bestehend aus einer festen Bodenplatte (2), die zugleich das Fahrgestell des Fahrzeugs bildet, an dem in Längsrichtung zu beiden Seiten des Fahrzeugs vertikalen Bodenteile (43-44) vorgesehen sind, welche sind umklappbar sind und somit eine Bühne bzw. eine Plattform bilden können, dadurch gekennzeichnet, daß diese Bodenteile (43-44) im Gegensatz zum festinstallierten Boden höhenverstellbar sind (2).

2. Tribünen-Fahrzeug nach Anspruch 1, dadurch gekennzeichnet, daß die Bodenteile (43-44) an den oberen freien Enden der vertikalen Stützen (29 bzw. 30) befestigt sind, welche durch die Unterkonstruktion so miteinander verbunden sind, daß sie mit Hilfe eines Parallelogramm-Systems (9-10-11), welches so angebracht ist, daß es im Vergleich zum Fahrgestell ausschwenken kann, ausschwenken können.

3. Tribünen-Fahrzeug nach Anspruch 2, dadurch gekennzeichnet, daß die Stützen (29-30) von unterschiedlicher Länge sind.

4. Tribünen-Fahrzeug nach Anspruch 2, dadurch gekennzeichnet, daß das Parallelogramm-System (9-10-11) so angebracht ist, daß es innerhalb eines hohlen Querträgers (8) des Fahrzeug-Fahrgestells ausschwenken kann.

5. Tribünen-Fahrzeug nach Anspruch 4, dadurch gekennzeichnet, daß der hohle Querträger (8) an den Längsträgern (6-7) des Fahrzeug-Fahrgestells befestigt ist.

6. Tribünen-Fahrzeug nach Anspruch 2, dadurch gekennzeichnet, daß sich das Parallelogramm-System aus zwei Schwenkarmen (9-10-11) zusammensetzt.

7. Tribünen-Fahrzeug nach Anspruch 6, dadurch gekennzeichnet, daß einer der beiden Schwenkarme (10-11) doppelt vorhanden ist, während sich der zweite (9) zwischen den beiden zuvorgenannten Schwenkarmen (10-11) befindet.

8. Tribünen-Fahrzeug nach Anspruch 4, dadurch gekennzeichnet, daß der hohle Querträger (8) die Form eines nach oben breiter werdenden V aufweist, während der untere Schwenkarm (9) die Form eines doppelten, sich nach oben verbreiternden V besitzt.

9. Tribünen-Fahrzeug nach einem der Ansprüche 4 bis 8, dadurch gekennzeichnet, daß die freien Enden des hohlen Querträgers (8) Lippen (14-15) aufweisen, in denen mehrere koaxiale Öffnungen paarweise vorhanden sind.

10. Tribünen-Fahrzeug nach Anspruch 9, dadurch gekennzeichnet, daß eine Klemmvorrichtung (18) auf dem Schwenkarm (10-11) in der Achse der Öffnungsreihe (16-17) in den vorgenannten Lippen (14-15) vorgesehen ist und mit den obenerwähnten Öffnungen (16-17) übereinstimmen kann.

11. Tribünen-Fahrzeug nach einem der vorhergehenden Ansprüche, dadurch gekennzeichnet, daß drei hohle Querträger (8), oder mehr, je nach Länge des Fahrzeugs, in jeweils gleichmäßigen Abständen in Längsrichtung des Fahrzeugs vorgesehen sind.

12. Tribünen-Fahrzeug nach einem der Ansprüche 2 bis 11, dadurch gekennzeichnet, daß Vorrichtungen (54-55) zwischen den vertikalen Stützen (29-30) und den umklappbaren Bodenteilen (43-44) vorgesehen sind, um diese Bodenteile (43-44) in verschiedenen aufeinanderfolgenden Positionen feststellen zu können.

13. Tribünen-Fahrzeug nach einem der vorhergehenden Ansprüche, dadurch gekennzeichnet, daß mindestens eine zusätzliche umklappbare Stütze (57) an der freien Seite mindestens eines Bodenteils (43-44) vorgesehen ist.

14. Tribünen-Fahrzeug nach Anspruch 12, dadurch gekennzeichnet, daß jede der Vorrichtungen (54-55) aus einem Teleskoparm besteht, dessen einschiebbare Teile in verschiedenen Positionen zueinander festgestellt werden können.

15. Tribünen-Fahrzeug nach einem der Ansprüche 2 bis 14, dadurch gekennzeichnet, daß mindestens eine Drehfeder (45-46) zwischen jedem Bodenteil (43-44) und der entsprechenden vertikalen Stütze (29 bzw. 30) vorgesehen ist.

16. Tribünen-Fahrzeug nach Anspruch 15, dadurch gekennzeichnet, daß die Drehfeder (45-46) so angebracht ist, daß sie das Gewicht des entsprechenden Bodenteils (43-44) ausgleichen kann.

17. Tribünen-Fahrzeug nach Anspruch 10, dadurch gekennzeichnet, daß eine Klemmvorrichtung (18) aus einem an den Armen (10-11) befestigten Lager (19) besteht, in dem sich zwei Kolben (20-21) befinden, auf deren Außenseiten je zwei Stifte (24-25) angebracht sind, welche in die Öffnungen (16-17) des entsprechenden Querträgers (8) einrasten können. Zwischen diesen Kolben (20-21) befindet sich eine Feder (26), und, zwischen den äußeren Enden des Lagers (19) und den jeweils daneben angebrachten Kolben, sind Anschlüsse (27-28) für den Öldruck vorgesehen.
